## Europäisches Patentamt
## European Patent Office
## Office européen des brevets

(19)

(11) Numéro de publication: **0 190 730**
**B1**

(12)

# FASCICULE DE BREVET EUROPÉEN

(45) Date de publication du fascicule du brevet:
21.06.89

(51) Int. Cl.⁴: **H 04 J 3/06,** H 04 L 7/00

(21) Numéro de dépôt: 86101441.3

(22) Date de dépôt: 04.02.86

(54) Dispositif de distribution d'horloge tripliquée, chaque signal d'horloge comportant un signal de synchronisation.

(30) Priorité: 07.02.85 FR 8501721

(43) Date de publication de la demande:
13.08.86 Bulletin 86/33

(45) Mention de la délivrance du brevet:
21.06.89 Bulletin 89/25

(84) Etats contractants désignés:
BE CH DE FR GB IT LI NL SE

(56) Documents cité:
EP-A-0 075 248
FR-A-2 315 736
FR-A-2 324 180
FR-A-2 427 747
US-A-4 164 629

(73) Titulaire: **ALCATEL CIT, 33, rue Emeriau, F-75015 Paris (FR)**

(72) Inventeur: **Denhez, Alain, 43 Avenue du Général du Gaulle, F-78140 Velizy- Villacoublay (FR)**
Inventeur: **Hargoaa, Francis, 12 Avenue de la Grande Armée, F-75017 Paris (FR)**
Inventeur: **Aubree, Jean, 1 rue Cardon, F-78380 Bougival (FR)**

(74) Mandataire: **Weinmiller, Jürgen, Lennéstrasse 9 Postfach 24, D-8133 Feldafing (DE)**

LIBER, STOCKHOLM 1989

EP 0 190 730 B1

## Description

L'invention concerne un dispositif de distribution d'horloge tripliquée, chaque signal d'horloge comportant un signal de synchronisation, pour la distribution de trois signaux d'horloge et de synchronisation à partir de trois horloges à des organes utilisateurs comportant chacun un récepteur qui reçoit, sur une logique majoritaire de type ET-OU les signaux acheminés chacun par une voie de transmission, et sépare le signal de synchronisation du signal d'horloge qui sont délivrés aux organes utilisateurs, voir par exemple EP-A-0 075 248 et FR-A-2 315 736.

De tels dispositifs de distribution sont utilisés chaque fois que l'on exige une grande stabilité du signal d'horloge et une grande sécurité de fonctionnement, comme c'est le cas par exemple pour les centraux téléphoniques.

Il est à noter qui des dispositifs de distrubition d'horloge sont également décrits et revendiqués dans les demandes EP-A-0 190 729 et EP-A-0 190 731, déposés à la même date que la présente demande.

> > > Il existe des dispositifs de distribution dans lesquels chaque signal d'horloge comporte un signal de synchronisation constitué par l'absence d'une impulsion d'horloge.

La simulation du signal de synchronisation par une absence d'impulsion dans le signal d'horloge entraîne, lors de la régénération du signal d'horloge dans les récepteurs, une erreur relative importante de l'ordre de 12 % sur le rapport cyclique du signal d'horloge régénéré au moment du top de synchronisation.

La présente invention a pour but d'obtenir une erreur relative sur le rapport cyclique du signal d'horloge régénéré, au moment du top de synchronisation, plus petite que celle donnée par la simulation d'un signal de synchronisation par une absence d'impulsion dans un signal d'horloge.

L'invention a pour objet un dispositif de distribution d'horloge tripliquée, chaque signal d'horloge comportant un signal de synchronisation, le dispositif comportant au moins une horloge mère, trois horloges esclaves et des récepteurs ayant chacun une logique majoritaire reliée aux trois horloges esclaves ayant chacune un oscillateur piloté par l'horloge mère, caractérisé par le fait que chaque horloge esclave comporte un générateur d'horloge et un générateur de synchronisation, que le générateur d'horloge comporte, outre l'oscillateur, un doubleur de fréquence, un diviseur de fréquence relié au doubleur de fréquence et divisant par deux la fréquence du signal délivré par ledit doubleur de fréquence, et un circuit d'initialisation relié en sortie au diviseur de fréquence, que le générateur de synchronisation comporte un circuit d'entrée relié en entrée aux générateurs de synchronisation des deux autres horloges esclaves et en recevant un signal de synchronisation d'horloge, ledit circuit d'entrée ayant une première sortie reliée au circuit d'initialisation du diviseur de fréquence, un compteur relié en entrée au doubleur de fréquence et ayant une entrée d'initialisation reliée à une deuxième sortie du circuit d'entrée, une bascule de type JK, ayant une entrée horloge reliée à une première sortie du compteur délivrant un premier signal, et un registre à décalage piloté par le doubleur de fréquence et relié en entrée à une sortie inverse de la bascule, ledit registre décalage ayant une première sortie reliée par un premier fil au diviseur de fréquence et au circuit d'initialisation, une deuxième sortie reliée à une entrée de remise à zéro de la bascule, et une troisième sortie reliée par un deuxième fil au diviseur de fréquence et au circuit d'initialisation, ledit diviseur de fréquence fonctionnant en diviseur par quatre lorsqu'il reçoit une impulsion de chacune des première et troisième sorties et délivrant à travers un inverseur de sortie un signal d'horloge comportant un signal de synchronisation, le signal d'horloge ayant une fréquence égale à celle du premier signal délivré par le compteur, et le signal de synchronisation ayant une fréquence moitié de celle du signal d'horloge et une durée d'une période, et que le compteur comporte une deuxième sortie délivrant un deuxième signal de fréquence moitié de celle du premier signal et reliée d'une part à une autre entrée du circuit d'entrée et d'autre part à chaque circuit d'entrée des deux autres horloges esclaves par un inverseur, chaque inverseur délivrant un signal de synchronisation d'horloge.

D'autres caractéristiques et avantages de l'invention apparaîtront au cours de la description qui va suivre d'exemples de réalisation illustrés par les figures annexées dans lesquelles:

- la figure 1 représente un dispositif de distribution de l'invention,
- la figure 2 représente une horloge esclave du dispositif de la figure 1,
- la figure 3 représente un circuit d'entrée d'un générateur de synchronisation de la figure 2,
- la figure 4 représente un circuit d'initialisation d'un générateur d'horloge de la figure 2,
- la figure 5 est un chronogramme de signaux relatif à la figure 2,
- la figure 6 est un chronogramme de signaux relatifs à deux horloges esclaves,
- la figure 7 est un chronogramme de signaux relatifs à trois horloges esclaves,
- la figure 8 représente un récepteur de la figure 1,
- la figure 9 est un chronogramme de signaux relatifs au récepteur de la figure 8,
- la figure 10 est un chronogramme de signaux relatifs à une logique majoritaire et un circuit de détection et de filtrage d'un récepteur.

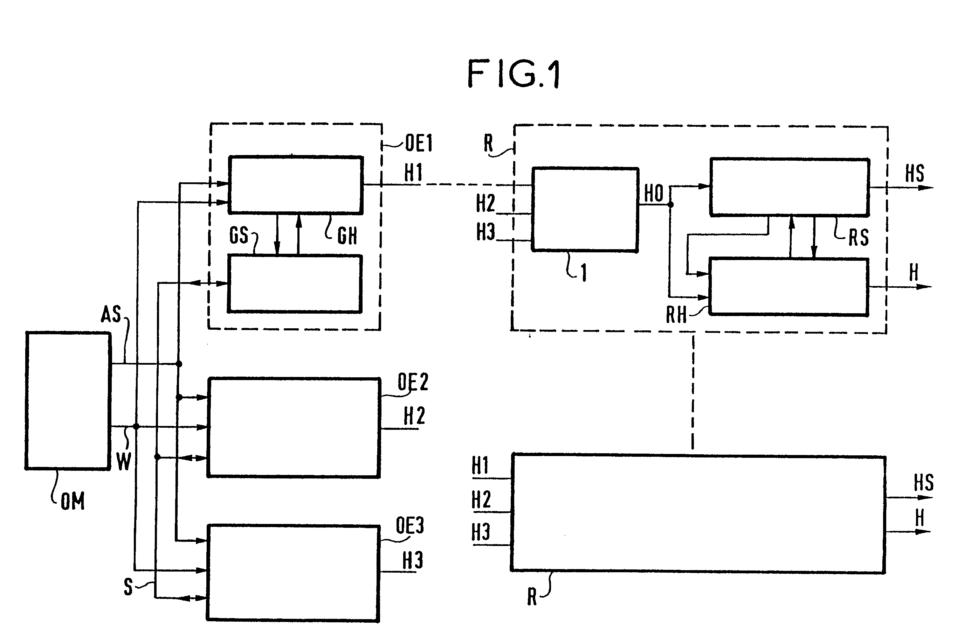

La figure 1 représente un dispositif de distribution de l'invention et comprend une horloge mère OM, trois horloges esclaves OE1, OE2, OE3 pilotées par l'horloge mère, et des récepteurs R. Chaque horloge esclave comprend un générateur d'horloge GH délivrant des signaux d'horloge, H1, H2, H3, respectivement, et un générateur de synchronisation GS relié au générateur d'horloge. Les générateurs d'horloge sont reliés à l'horloge mère par une ligne de signaux d'horloge W et par une ligne de signaux d'asservissement AS, pour pilotage et asservissement; les generateurs de synchronisation sont reliés entre eux par une ligne de synchronisation S. Les récepteurs R sont identiques et chacun d'eux comporte une logique majoritaire 1 reliée en entrée à chacune des horloges esclaves OE1, OE2, OE3, un régénérateur de synchronisation RS et un régénérateur d'horloge RH reliés entre eux et à la logique majoritaire. Le régénérateur de synchronisation délivre un signal de synchronisation H5 et le régénérateur d'horloge délivre un signal d'horloge H.

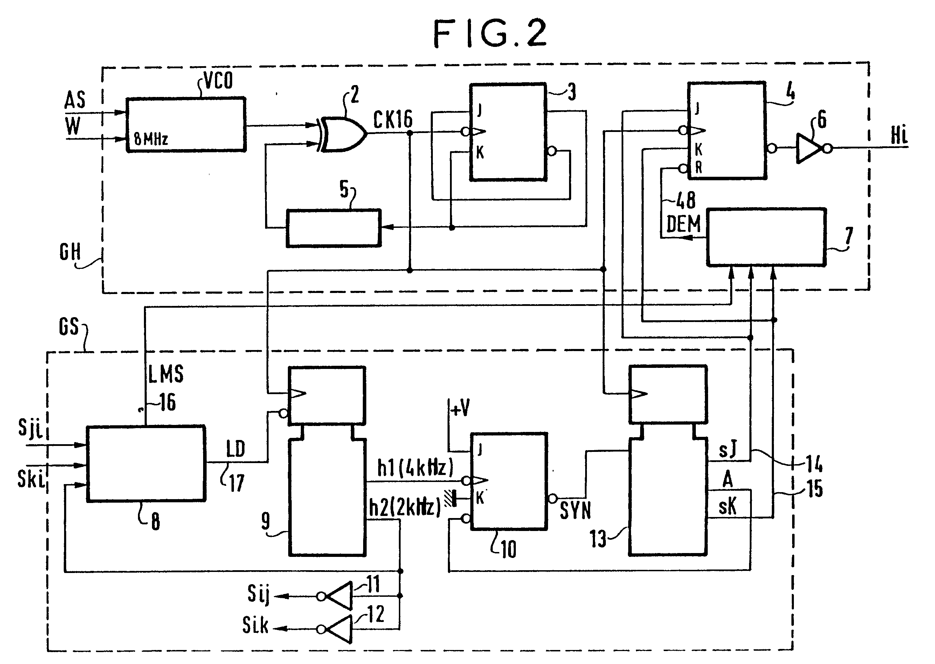

La figure 2 représente une horloge esclave. Dans le générateur d'horloge GH un oscillateur VCO, asservi en tension est relié en entrée à l'horloge mère par la ligne de signaux d'horloge W et la ligne d'asservissement AS, et en sortie à une entrée d'une porte OU exclusif 2; deux bascules 3 et 4, de type JK, ont leur entrée horloge reliée à la sortie de la porte OU exclusif 2. La sortie directe de la bascule 3 est reliée d'une part à une autre entrée de la porte OU exclusif 2 par une ligne à retard 5, et d'autre part à l'entrée K de la bascule 3; la sortie inverse de la bascule 3 est reliée à l'entrée J. La sortie inverse de la bascule 4 est reliée à un inverseur 6 qui delivre le signal d'horloge Hi. Un circuit d'initialisation 7, est relié en sortie à l'entrée de remise à zéro de la bascule 4 à laquelle il délivre un signal DEM de démarrage lors de la mise sous tension.

Le générateur de synchronisation GS comporte un circuit d'entrée 8 relié en entrée aux générateurs de synchronisation des deux autres horloges esclaves et en reçoit les signaux de synchronisation d'horloge Sji et Ski (la lettre i se rapporte à l'horloge esclave représentée et les lettres j et k se rapportent respectivement aux deux autres horloges esclaves); une première sortie du circuit d'entrée 8 est reliée par un fil 16 au circuit d'initialisation 7. Un compteur 9 a une entrée horloge reliée à la sortie de la porte OU exclusif 2 du générateur d'horloge, et une entrée d'initialisation reliée par un fil 17 à une deuxième sortie du circuit d'entrée 8. Une sortie du compteur 9 délivrant un premier signal d'horloge h1 est reliée à l'entrée horloge d'une bascule 10, de type JK; une autre sortie du compteur délivrant un deuxième signal d'horloge h2, utilisé pour la synchronisation des horloges esclaves, est reliée d'une part directement à une entrée du circuit d'entrée 8 et d'autre part à deux inverseurs 11, 12 qui délivrent des signaux de synchronisation d'horloge Sij et Sik, respectivement, à destination des deux autres horloges esclaves. La bascule 10 à son entrée J reliée 2 un potentiel positif +V et son entrée K reliée à la masse. La sortie inverse de la bascule 10 est reliée à une entrée d'un registre à décalage 13 ayant une première et une troisième sorties reliées par des fils 14, 15 d'une part aux entrées J et K de la bascule 4 du générateur d'horloge GH, et d'autre part au circuit d'initialisation 7, et une deuxième sortie reliée à entrée de remise à zéro de la bascule 10 à laquelle elle délivre un signal de remise à zéro A; les fils 14, 15 acheminent des signaux sJ et sK, respectivement. Une entrée horloge du registre à décalage 13 est reliée à la sortie de la porte OU exclusif 2 du générateur d'horloge GH.

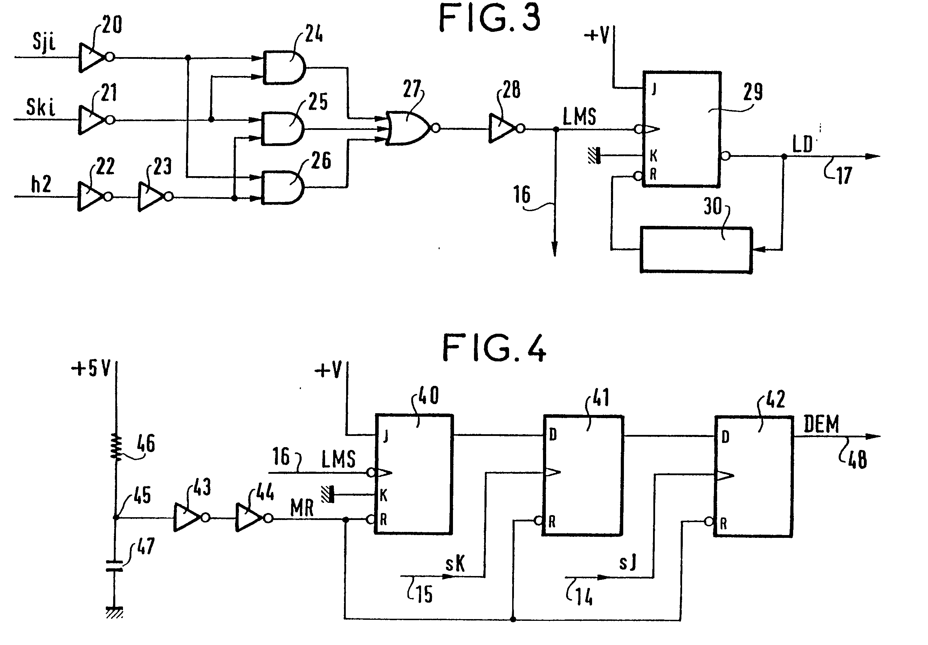

La figure 3 représente le circuit d'entrée 8 du générateur de synchronisation GS. Ce circuit d'entrée comporte quatre inverseurs 20, 21, 22, 23, trois portes ET, 24, 25, 26, une porte OU-NON 27, un inverseur 28, une bascule 29 et un circuit à retard 30. Les portes ET et la porte OU-NON constituent une logique majoritaire, de type connu, les portes ET recevant à travers les inverseurs les signaux de synchronisation Sji, Ski, délivrés par les générateurs de synchronisation des deux autres horloges esclaves, et le signal h2 issu du compteur 9 du générateur de synchronisation de la figure 2. La sortie de la porte OU-NON est reliée à travers l'inverseur 28 d'une part au fil 16 et d'autre part à une entrée horloge de la bascule 29, de type JK dont l'entrée J est reliée à un potentiel +V et l'entrée K est reliée à la masse; la sortie inverse de la bascule est reliée d'une part au fil 17 et d'autre part à une entrée de remise à zéro par le circuit à retard 30.

La figure 4 représente le circuit d'initialisation 7 du générateur d'horloge GH de la figure 2. Ce circuit comporte essentiellement une bascule 40 de type, et deux bascules 41, 42 de type D. La bascule 40 a son entrée horloge reliée par le fil 16 à la sortie de l'inverseur 28 du circuit d'entrée 8 représenté figure 3; son entrée J est reliée à un potentiel +V et son entrée K est reliée à la masse. La bascule 41 a son entrée de données D reliée à la sortie directe de la bascule 40 et son entrée horloge reliée au fil 15 (figure 2). La bascule 42 a son entrée de données D reliée à la sortie directe de la bascule 41 et son entrée horloge reliée au fil 14 (figure 2). Les entrées de remise à zéro R des bascules 40, 41, 42 sont reliées, à travers deux inverseurs 43, 44 à un point 45, commun à une résistance 46 et à condensateur 47 en série entre une tension +5V et la masse. La sortie directe de la bascule 42 est reliée par le fil 48 à l'entrée de remise à zéro de la bascule 4 de la figure 2.

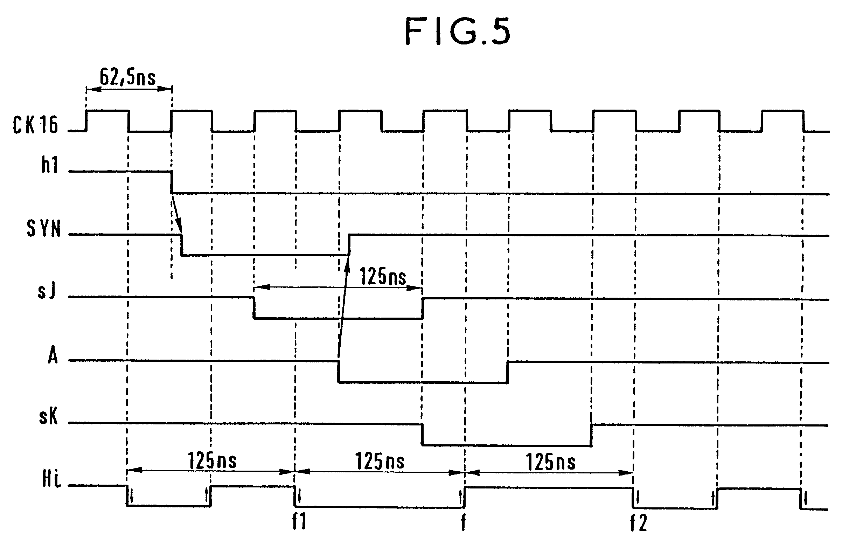

On va décrire à présent le fonctionnement d'une horloge esclave, en supposant, à titre d'exemple, que l'oscillateur VCO délivre un signal à la fréquence de 8 MHz. Dans la figure 2, la porte OU exclusif 2, la bascule 3 et la ligne à retard 5 constituent un doubleur de fréquence; la porte OU exclusif 2 délivre un signal CK16 de fréquence 16 MHz, représenté dans la figure 5.

La ligne à retard 5 introduit un retard dans la transmission du signal issu de la sortie directe de la bascule 3, et permet d'obtenir une impulsion de durée minimale exigée par les caractéristiques de la bascule 3 pour un bon fonctionnement. La porte OU exclusif 2 permet l'obtention d'une impulsion négative de fréquence 16 MHz sur chaque front montant du signal de fréquence 8 MHz Le compteur 9, incrémenté par le signal CK 16 délivre les deux signaux h1 et h2, de fréquences 4 kHz et 2 kHz, respectivement. Le signal d'horloge h1 est injecte sur la bascule 10 et le signal d'horloge h2 sert à la synchronisation mutelle des compteurs 9 des horloges esclaves par l'intermédiaire de la logique majoritaire des circuits d'entrée 8. Quand les compteurs de deux horloges esclaves parmi trois présentent un recouvrement de phase des signaux h2, un signal majoritaire de synchronisation LMS en sortie de l'inverseur 28 de la figure 3 est appliqué à la bascule 29 qui génère une impulsion d'initialisation des compteurs LD d'une durée de 100 nanosecondes; cette impulsion initialise simultanément les trois compteurs 9 des horloges esclaves à la même valeur, puisqu'elle est générée par chaque circuit d'entrée 8. Le front négatif du signal d'horloge h1 aplique à l'entrée horloge de la bascule 10 positionne une impulsion de synchronisationon SYN délivrée par la sortie inverse de cette bascule, et qui agit sur l'entrée série du registre à décalage 13. Ce registre à déaclage délivre deux impulsions sJ et sK, déphasées, de fréquence 8 MHz, synchrones avec le signal CK16 à 16; chacune des impulsions sJ et sK a une durée égale à deux périodes du signal CK16 délivré par le doubleur de fréquence (125 ns), le déphasage de l'impulsion sK étant égal à deux périodes du signal CK16; le registre à décalage délivre également une impulsion A déphasée d'une période du signal CK16 par rapport à l'impulsion sJ, et de durée égale à deux périodes du signal CK16.

La bascule 4, figure 2, restitue le signal d'horloge à 8 MHz de l'oscillateur VCO, hors impulsion de synchronisation. Pendant l'impulsion de synchronisation SYN délivrée par la bascule 10, les entrées J et K de la bascule 4 passent, chacune leur tour, à zéro, ce qui force l'état de la bascule et réduit sa fréquence de commutation; on obtient ainsi, après l'inverseur 6 relié à la sortie inverse de la bascule 4, le signal d'horloge Hi à 8 MHz c'est-à-dire, sur la figure 1, les signaux d'horloge H1, H2, H3 délivrés par les horloges esclaves OE1, OE2, OE3. Cette réduction de la fréquence est assimilable à une inversion du front actif du signal d'horloge Hi représenté figure 5 qui est un chrongramme de signaux mentionnés dans la figure 2; le front f du signal d'horloge Hi est un front positif, alors que sans le changement de fréquence ce front serait un front négatif. On notera que le changement de fréquence du signal d'horloge Hi a une durée de 250 nanosecondes entre les fronts f1 et f2, et correspond a un signal de synchronisation incorporé dans le signal d'horloge Hi, et de fréquence de répétition 4 kHz. La bascule 4 fonctionne donc en diviseur de fréquence par deux ou par quatre du signal CK16 délivré par le doubleur de fréquence.

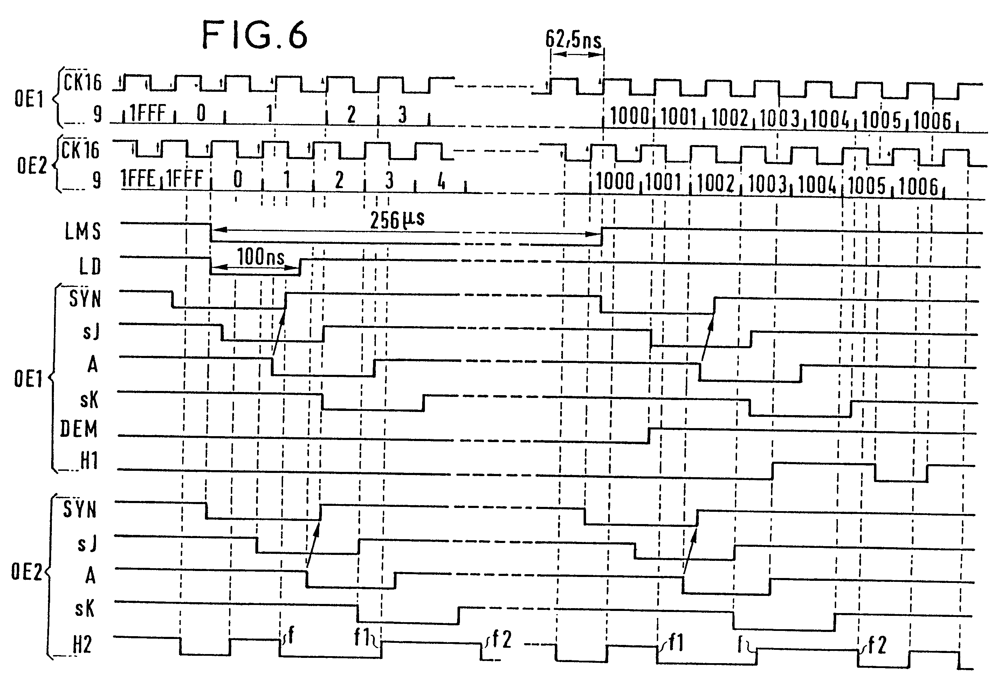

La figure 6 est un chronogramme des signaux dans les horloges esclaves OE1 et OE2, en supposant que l'horloge esclave OE2 est en fonctionnement et que l'horloge esclave OE1 est mise en service. Lors de la mise sous tension de l'horloge esclave OE1, la bascule 4 de celle-ci est bloquée par le circuit d'initialsation 7, le signal de démarrage DEM ayant la valeur 0; le signal d'horloge correspondant H1 est donc bloqué. Le compteur 9 du générateur de synchronisation progresse, et dès que les compteurs 9 des deux horloges esclaves OE1 et OE2 sont approximativement en phase, la logique majoritaire de chaque circuit d'entrée 8 délivre un signal majoritaire de synchronisation, LMS, appliqué d'une part à la bascule 29 qui délivre l'impulsion d'initialisation de compteur LD, et d'autre part au circuit d'initialisation 7. Dans l'horloge esclave OE1 qui vient d'être mise en service, le signal d'horloge h1, à 4 kHz, permet l'obtention des signaux SYN, sJ et sK; le signal sK permet, (figure 4) la prise en compte, par la bascule 41, du signal de sortie de la bascule 40 qui a reçu le signal majoritaire de synchronisation LMS. Le compteur 9 de l'horloge esclave OE1 ayant été initialisé (mise à zéro), le signal d'horloge h1, engendre, à nouveau, 256 microsecondes plus tard, les signaux SYN, sJ et sK, comme représenté figure 6. Le signal sJ, permet la prise en compte, par la bascule 42 du circuit d'initialisation 7, du signal délivré préalablement par la bascule 41; la bascule 42 délivre le signal de démarrage DEM autorisant le fonctionnement de la bascule 4 du générateur d'horloge GH, qui peut alors délivrer le signal d'horloge H1.

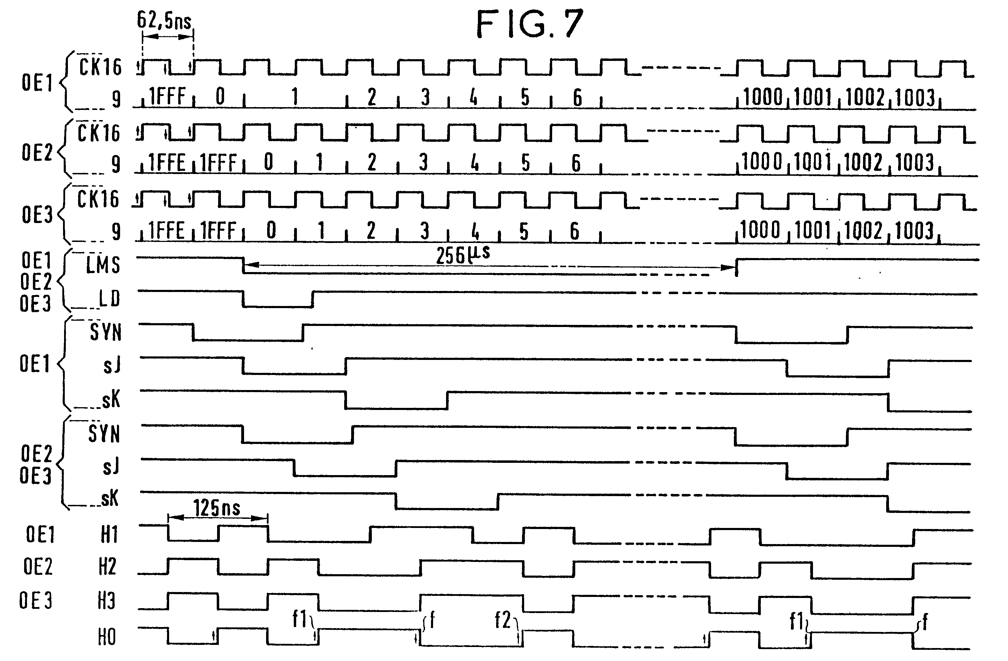

Le chronogramme de la figure 7 qui est relatif aux signaux dans les trois horloges esclaves montre que le déphasage entre les trois signaux d'horloge H1, H2, H3, ne peut pas dépasser une demi-période; dans cette figure les signaux d'horloge H2 et H3 sont en phase et le signal d'horloge H1 est déphasé d'une demi-période; le signal majoritaire de synchronisation LMS et l'impulsion d'initialisation de compteur LD apparaissent simultanément dans les trois horloges esclaves, ce qui permet d'engendrer un signal de synchronisation dans chacun des signaux d'horloge H1, H2, H3. Les compteurs 9 ayant été initialisés simultanément, on retrouve dans les trois horloges esclaves les signaux SYN, sJ, sK en phase, puisque les signaux d'horloge h1 délivrés par les compteurs sont en phase. Dans l'horloge esclave OE1 la bascule 4, figure 2, est forcée par les signaux sJ et sK, et ce forçage provoque un saut de phase du signal d'horloge H1; on réalise ainsi un asservissement de phase qui évite l'absorption d'une impulsion d'horloge et le masquage d'une impulsion de synchronisation par la logique majoritaire 1 des récepteurs.

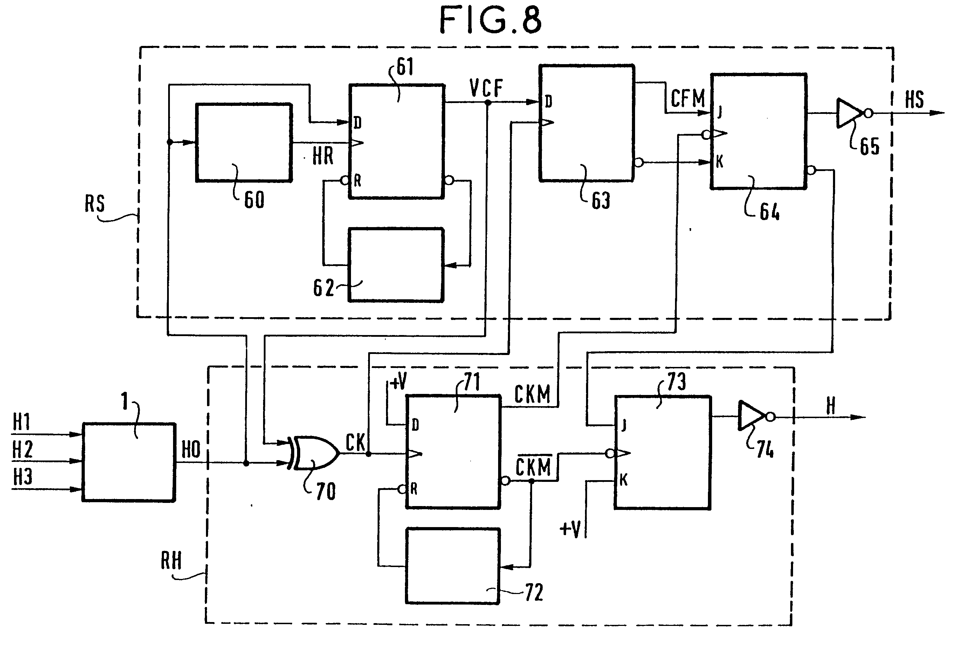

La figure 8 représente un récepteur R de la figure 1. La logique majoritaire 1 est constituée de trois portes ET et d'une porte OU-NON, de manière connue, et délivre un signal d'horloge majoritaire HO. Le régénérateur de synchronisation RS comprend une première ligne à retard 60 reliée à la sortie de la logique majoritaire 1, une première bascule 61 de type D, dont l'entrée horloge est reliée à la sortie de la première ligne à retard 60, et dont l'entrée est reliée à la sortie de la logique majoritaire, une deuxième ligne à retard 62 reliée en entrée à la sortie inverse de la première bascule 61 et en sortie à une entrée de remise à zéro de la première bascule; une deuxième bascule 63 de type D a son entrée reliée à la sortie directe de la première bascule 61 et sa sortie directe reliée à l'entrée J d'une troisième bascule 64, de type JK, et sa sortie inverse reliée à l'entree K de la troisième bascule dont la sortie directe est reliée à un inverseur 65 qui délivre un signal de synchronisation HS.

Les deux lignes à retard 60, 62 et la bascule 61 constituent un circuit de test de la durée impulsions d'horloge; les bascules 63, 64 constituent un circuit ce restitution du signal de synchronisation.

Le régénérateur d'horloge RH comporte une porte OU exclusif 70 dont une entrée est reliée à la sortie de la logique majoritaire 1, et une autre entrée est reliée à la sortie directe de la première bascule 61 du régénérateur de synchronisation RS; une première bascule 71, de type D, ayant son entrée reliée à un potentiel positif +V, son entrée horloge reliée à la sortie de la porte OU exclusif 70, sa sortie directe reliée à l'entrée horloge de la troisième bascule 64, et sa sortie inverse reliée par une ligne à retard 72 à son entrée de remise à zéro; une deuxième bascule 73, de type JK ayant son entrée horloge reliée à la sortie inverse de la deuxième bascule 71, son entrée J relée à la sortie inverse de la troisième bascule 64, son entrée K reliée au potentiel positif +V, et sa sortie directe reliée à un inverseur 74 qui délivre le signal d'horloge H. La sortie de la porte OU exclusif 70 est également reliée à l'entrée horloge de la deuxième bascule 63 du régénérateur de synchronisation RS. La logique majoritaire 1 délivre un signal majoritaire d'horloge HO qui est transmis à la bascule 71 par la porte OU exclusif 70. La bascule 71 et la ligne à retard 72 constituent un circuit de régénération et de filtrage pour régénérer un signal d'horloge et le filtrer; la bascule 73 constitue un circuit de synchronisation et de division du signal d'horloge.

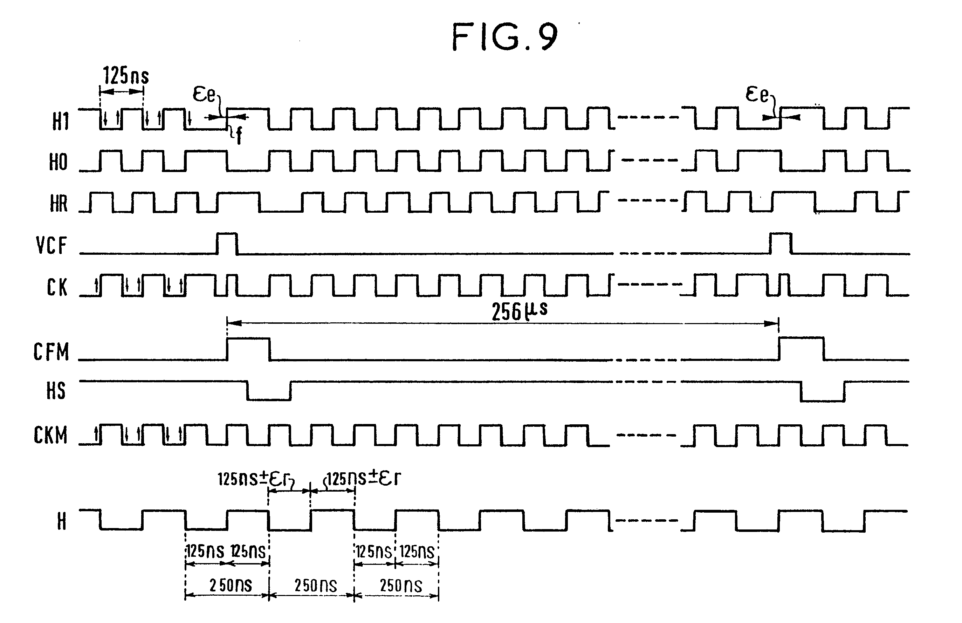

En reprenant l'exemple des horloges esclaves, les signaux d'horloge H1, H2, H3 reçus par la logique majoritaire 1 ont une fréquence de 8 MHz et comportent chacun un signal de synchronisation. La figure 9 est un chronogramme de différents signaux dans le récepteur de la figure 8, en supposant que les signaux H1, H2, H3, reçus par la logique majoritaire 1 sont en phase, on obtient le signal majoritaire d'horloge HO en sortie; la première ligne à retard 60 introduit un retard compris entre une demi-période et une période du signal d'horloge HO, soit par exemple 80 nanosecondes, et délivre un signal d'horloge retardé HR. La bascule 61 délivre une impulsion VCF dont la largeur est fixée par la ligne à retard 62, à la valeur de 50 nanosecondes par exemple. Cette impulsion VF apparaît lorsque le signal de synchronisation incorporé dans les signaux d'horloge H1, H2, H3, donc dans le signal majoritaire d'horloge HO, est pris en compte par le signal d'horloge retardé HR. Cette impulsion VCF est appliquée à la porte OU exclusif 70 et provoque dans le signal CK délivré par ladite porte OU exclusif, une inversion du front correspondant au front f du signal de synchronisation dans le signal majoritaire d'horloge HO. La bascule 63 délivre une impulsion CFM de durée égale à l'impulsion de synchronisation du signal d'horloge H1. La bascule 71 délivre sur sa sortie directe un signal d'horloge CKM et sur sa sortie inverse un signal d'horloge $\bar{C}\bar{K}\bar{M}$; ces signaux d'horloge ont même fréquence que le signal majoritaire d'horloge HO, avec régénération du signal d'horloge lors du signal de synchronisation inclus dans le signal majoritaire d'horloge HO. La ligne à retard 72 introduit un retard de l'ordre d'une demi-période du signal CK dans la tramission du signal $\bar{C}\bar{K}\bar{M}$ délivré par la sortie inverse de la bascule 71. Dans la troisième bascule 64 le signal CFM est pris en compte par le signal d'horloge CKM; en sortie de l'inverseur 65 on obtient le signal de synchronisation HS. La deuxième bascule 73, divise par deux la fréquence du signal $\bar{C}\bar{K}\bar{M}$ et l'inverseur 74 délivre le signal d'horloge H fréquence 4 MHz; le signal délivré par la sortie inverse de la troisième bascule 64, qui est identique au signal de synchronisation HS mais inversé, est appliqué à l'entrée 5 de la deuxième bascule 73, et perment la synchronisation du signal d'horloge H.

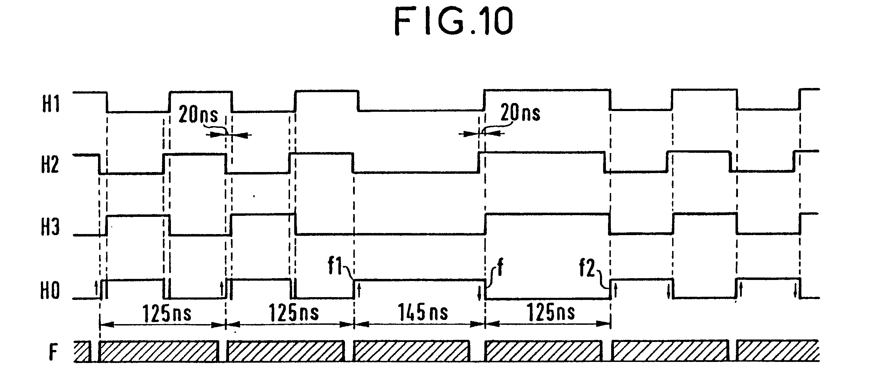

La mise en service d'une horloge esclave provoque des déphasages entre les signaux d'horloge H1, H2, H3. Ce phénomène est lié au temps de reponse de l'asservissement entre les horloges esclaves. L'asservissement des oscillateurs VCO limite à 20 nanosecondes le décalage entre les signaux d'horloge, en fonctionnement normal. Un autre asservissement de phase est réalisé, dans chaque horloge esclave par forçage de la bascule 4, comme indiqué préédemment. Dans un récepteur, la mise en service d'une horloge esclave provoque des impulsions parasites sur le signal majoritaire d'horloge HO, comme représenté dans la figure 10 qui est un chronogramme des signaux l'horloge H1, H2, H3 et HO. Dans cette figure les signaux H1, H2 sont en phase, avec un décalage maximum de 20 nanosecondes. La mise en service de la troisième horloge esclave OE3 provoque des impulsions parasites sur le signal HO quand il y à opposition de phase du signal d'horloge H3 avec le signal d'horloge délivré par l'une des deux autres horloges esclaves. Ces impulsions parasites sont filtrées, le filtrage étant réalisé par la ligne à retard 72 qui rebouche la sortie inverse de la bascule 71 sur son entrée de remise à zéro, le retard introduit étant compris entre une demi-période et une période du signal d'horloge majoritaire HO; avec les valeurs prises précédemment à titre d'exemple, le retard est de l'ordre de 100 nanosecondes; l'ensemble bascule 71 et ligne à retard 72 est équivalent à une bascule monostable. Sur la figure 10, le repère F concerne le filtrage. Après l'impulsion de synchronisation, le signal d'horloge H3 est remis en phase avec les signaux d'horloge H1 et H2 et les impulsions parasites disparaissent dans le signal maoritaire d'horloge HO. Sur le chronogramme de la figure 10 on remarquera que le saut de phase du signal d'horloge H3 provoque un allongement du signal majoritaire d'horloge HO entre les fronts f et f2, allongement équivalent au décalage entre les signaux d'horloge H1 et H2, soit 20 nanosecondes dans l'exemple illustré; cet allongement n'est pas gênant pour les circuits d'utilisation reliés au récepteur.

Dans une horloge esclave, au moment de l'impulsion de synchronisation, la bascule 4 qui délivre le signal d'horloge Hi change de fréquence de fonctionnement; ce changement provoque une inversion du front actif du signal d'horloge à 8 MHz, ce front étant repéré f dans les chronogrammes. Sur une ligne de transmission reliant une horloge esclave à un récepteur il y a une différence de temps de propagation entre les fronts actif et négatif du signal d'horloge Hi; cette différence est de l'ordre de 0,5 nanoseconde. A cette différence il faut ajouter la différence de temps de commutation $t_{pLH}$ et $t_{pHL}$ de la bascule 4 et de l'inverseur 6, soit 0,5 nanoseconde pour la bascule et 1 nanoseconde pour l'inverseur; au total, à l'entrée de la logique majoritaire 1 d'un récepteur on a une erreur

$$\varepsilon e = 2\,ns$$

Dans un récepteur, au moment de l'impulsion de synchronisation, la précision sur le rapport cyclique du signal d'horloge $H_1$, dont la fréquence est alors de 4 MHz, est liée à la différence de temps de propagation entre les temps de commutation $t_{pHL}$ et $t_{pLH}$ de la logique majoritaire 1 et de la porte OU exclusif 70, soit 1 nanoseconde pour la logique majoritaire et 1 nanoseconde pour la porte OU exclusif, soit

$$\varepsilon r = 2$$

nano-secondes entre un signal d'horloge Hi et le signal CK en sortie de la porte OU exclusif.

Ainsi, au moment d'une impulsion de synchronisation, l'erreur sur le rapport cyclique du signal d'horloge H délivré par un récepteur est égal à

$$\varepsilon e + \varepsilon r = 4\,ns$$

et l'erreur relative est de

$$\tfrac{4}{125} \times 100 = 3,2\,\%$$

Cette erreur relative est donc très nettement inférieure à celle, 12 %, d'un système dans lequel l'impulsion de synchronisation est simulée par une absence d'impulsion dans un signal d'horloge; il en découle une meilleure précision des impulsions, du signal de synchronisation HS et de l'horloge H issus des récepteurs.

**Revendications**

1. Dispositif de distrbution d'horloge tripliquée, chaque signal d'horloge comportant un signal de synchronisaton, le dispositif comportant au moins une horloge mère (OM), trois horloges esclaves (OE1, OE2, OE3) et des récepteurs (R) ayant chacun une logique najoritaire (1) reliée aux trois horloges esclaves ayant chacune un oscillateur (VCO) piloté par l'horloge mère, caractérisé par le fait que chaque horloge esclave comporte un générateur d'horloge (GH) et un générateur de synchronisation (GS), que le générateur d'horloge comporte, outre l'oscillateur, un doubleur de fréquence (2, 3, 5), un diviseur de fréquence (4) relié au doubleur de fréquence et divisant par deux la fréquence du signal délivré par ledit doubleur de fréquence, et un circuit d'initialsction (7) relié en sortie au diviseur de fréquence, que le générateur de synchronsation (GS) comporte un circuit d'entrée (8) relié en entrée aux générateurs de synchronisation des deux autres horloges esclaves et en recevant un signal de synchronisation d'horloge (Sji, Ski), ledit circuit d'entrée ayant une première sortie reliée au circuit d'initialisation du diviseur de fréquence, un compteur (9) relié en entrée au doubleur de fréquence et ayant une entrée d'initialisation reliée à une deuxième sortie du circuit d'entrée (8), une bascule (10) de type JK, ayant une entrée horloge reliée à une première sortie du compteur (9) délivrant un premier signal (h1), et un registre à décalage (13) piloté par le doubleur de fréquence et relié en entrée à une sortie inverse de la bascule (10), ledit registre à décalage ayant une première sortie reliée par un premier fil (14) au diviseur de fréquence et au circuit d'initialisation, une deuxième sortie reliée à une entrée de remise à zéro de la bascule, et une troisième sortie reliée par un deuxième fil (15) au diviseur de fréquence et au circuit d'initialisation, ledit diviseur de fréquence fonctionnant en diviseur par quatre lorsqu'il reçoit une impulsion (sJ, sK) de chacune des première et troisième sorties et délivrant à travers un inverseur de sortie (6) un signal d'horloge (Hi) comportant un signal de synchronisation le signal d'horloge ayant une fréquence égale à celle du premier signal (h1) délivré par le compteur (9), et le signal de synchronisation ayant une fréquence moitié de celle du signal d'horloge et une durée d'une période, et que le compteur (9) comporte une deuxième sortie délivrant un deuxième signal (h2) de fréquence moitié de celle du premier signal (h1) et reliée d'une part à une autre entrée du circuit d'entrée (8) et d'autre part à chaque circuit d'entrée des deux autres horloges esclaves par un inverseur (11, 12), chaque inverseur délivrant un signal de synchronisation d'horloge (Sij; Sik).

2. Dispositif de distribution selon la revendication 1, caractérisé par le fait que le diviseur de fréquence (4) est une bascule de type JK ayant une entrée horloge reliée au doubleur de fréquence, une première entrée (J) reliée à la première sortie du registre à décalage (13) par le premier fil (14), une deuxième entrée (K) reliée à la troisième sortie du registre à décalage par le deuxième fil (15), une entrée de remise a zéro reliée au circuit d'initialisation (7) et une sortie inverse reliée à l'inverseur de sortie (6), que les première et troisième sortie du registre à décalage délivrent chacune une impulsion de durée égale à deux périodes du signal délivré par le doubleur de fréquence, l'impulsion délivrée par la troisième sortie étant décalée par rapport à l'impulsion délivrée par la première sortie de la largeur de cette impulsion, et que la deuxième sortie du registre à décalage délivre une impulsion (A) de même largeur que l'impulsion délivrée par la première sortie et décalée par rapport à elle d'une demi-largeur d'impulsion.

3. Dispositif de distribution selon la revendication 1, caractérisé par le fait que le circuit d'entrée (8) comporte une logique majoritaire, une bascule (29) de type JK et une ligne à retard (30), que la logique majoritaire est reliée en entrée aux signaux de synchrironisation d'horloge et en sortie à une entrée horloge de la bascule, ladite sortie de la logique majoritaire constituant la première sortie du circuit d'entrée relée au circuit d'initialisation (7), et que la bascule a une première entrée (J) reliée à un potentiel positif, une deuxième entrée (K) reliée à la masse et une sortie inverse constituant la deuxième sortie du circuit d'entrée, ladite sortie inverse étant également reliée par la ligne à retard (30) à une entrée de remise à zéro.

4. Dispositif de distribution selon la revendication 1, caractérisé par le fait que le circuit d'initialisation (7) comporte une première bascule (40) de type JK, une deuxième bascule (41), de type D, et une troisième bascule (42), de type D, qu'une entrée de remise à zéro de chaque bascule est reliée à un potentiel positif à travers deux inverseurs (43, 44) en série, que la première bascule (40) a une première entrée (J) reliée à un autre potentiel positif, une deuxième entrée (K) reliée à la masse et une entrée horloge reliée à la première sortie du circuit d'entrée (8), que la deuxième bascule (41) a une entrée reliée à une sortie directe de la première bascule et une entrée horloge reliée à la troisième sortie du registre à décalage (13), et que la troisième bascule (42) a une entrée reliée à une sortie directe de la deuxième bascule (41), une entrée horloge reliée à la première sortie du registre à décalage, et une sortie directe reliée à une entrée de remise à zéro du diviseur de fréquence (4).

5. Dispositif de distribution selon la revendication 1, caractérisé par le fait qu'un récepteur (R) comporte également un régénérateur d'horloge (RH) et un régénérateur de synchronisation (RS) reliés en entrée à la logique majoritaire (1) qui délivre un signal d'horloge majortaire (HO), que le régénérateur d'horloge comprend une porte OU exclusif (70) reliée en entrée à la logique majoritaire, un circuit de régénératon et de filtrage (71, 72) relié à la porte OU-exclusif pour régénération et filtrage du signal d'horloge dans le signal majoritaire d'horloge transmis par la porte OU-exclusif, ledit circuit de régénération et de filtrage ayant une première sortie et une deuxième sortie, et un circuit de synchronisation et de division (73) piloté par un signal $\overline{CKM}$ délivré par la deuxième sortie du circuit de régénération et de filtrage et délivrant à travers un inverseur de sortie (74) un signal d'horloge (H), que le régénérateur de synchronisation (RS) comporte un circuit de test (60, 61, 62) de la durée des impulsions du signal d'horloge majoritaire (HO) et un circuit de restitution (63, 64) du signal de synchronisation, ledit circuit de test étant relié en sortie à une entrée de la porte OU-exclusif et au circuit de restitution, ledit circuit de restitution étant relié, pour pilotage d'une part en sortie de la porte OU-exclusif et d'autre part à la première sortie du circuit de régénération et de filtrage, et ayant une première sortie reliée à un inverseur de sortie (65) pour délivrer le signal de synchronisation (HS) et une deuxième sortie reliée à une entrée du circuit de synchronisation et de division (73).

6. Dispositif de distribution selon la revendication 5, caractérisé par le fait que le circuit de régénération et de filtrage est constitué par une bascule (71) de type D et une ligne à retard (72), ladite bascule ayant une entrée horloge reliée en sortie de la porte OU exclusif, une entrée de données reliée à un potentiel positif, une sortie directe, et une sortie inverse reliée à une entrée de remise à zéro de la bascule par la ligne à retard, les sorties directe et inverse constituant les première et deuxième sorties du circuit de régénération et de filtrage.

7. Dispositif de distribution selon la revendication 5, caractérisé par le fait que le circuit de synchronisation et de division est constitué par une bascule (73) de type JK ayant une entrée horloge reliée à la deuxième sortie du circuit de régénération et de filtrage (71, 72), une première entrée (J) reliée à la deuxième sortie du circuit de restitution (63, 64), une deuxième entrée (K) reliée à un potentiel positif, et une sortie directe reliée à l'inverseur de sortie (74) pour délivrer le signal d'horloge (H).

8. Dispositif de distribution selon la revendcation 5, caractérisé par le fait que le circuit de test est constitué par une bascule (61) de type D, une première (60) et une deuxième (62) lignes à retard, une entrée de données de la bascule et une entrée de la première ligne à retard (60) étant reliées à la logique majoritaire (1), la première ligne à retard étant reliée en sortie à une entrée horloge de la bascule, une sortie inverse de la bascule étant reliée à une entrée de remise à zéro par la deuxième ligne à retard (62), une sortie directe de la bascule constituant la sortie du circuit de test.

9. Dispositif de distribution selon la revendication 5, caractérisé par le fait que le circuit de restitution est constitué par une première bascule (63) de type D, et une deuxième bascule (64) de type JK, que la première bascule a une entrée de données reliée à la sortie du circuit de test, une entrée horloge reliée à la porte OU-exclusif (70), une sortie directe reliée à une première entrée (J) de la deuxième bascule et une sortie inverse reliée à une deuxième entrée (J) de la deuxième bascule, et que la deuxième bascule a une entrée horloge reliée à la première sortie du circuit de régénération et de filtrage (71, 72), une sortie directe et une sortie inverse constituant les première et deuxieme sorties du circuit de restitution.

**Patentansprüche**

1. Schalungsanordnung zur Dreifachtaktverteilung, wobei jedes Taktsignal ein Sychronisationssignal enthält und die Anordnung mindestens einen Primartaktgeber (OM) drei Sekundärtaktgeber (OE1, OE2, OE3) und Empfänger (R) aufweist, die je einen Majoritätslogikkreis (1) besitzen, der mit den drei Sekundärtaktgebern verbunden ist, von denen jeder einen Oszillator (VCO) besitzt, der vom Primärtaktgeber gesteuert wird, dadurch gekennzeichnet, daß jeder Sekundärtaktgeber einen Taktgenerator (GH) und einen Synchronisationsgenerator (GS) aufweist, daß der Taktgenerator zusätzlich zum Oszillator einen Frequenzverdoppler (2, 3, 5), einen Frequenzteiler (4), der mit dem Frequenzverdoppler verbunden ist und die Frequenz des vom Frequenzverdoppler gelieferten Signals halbiert, und einen Initialisierungskreis (7) aufweist, der ausgangsseitig mit dem Frequenzteiler verbunden ist, daß der Synchronisationsgenerator (GS) einen Eingangskreis (8), der eingangsseitig mit den Synchronisationsgeneratoren der beiden anderen Sekundärtaktgeber verbunden ist und von diesen ein Taktsynchronisationssignal (Sji, Ski) empfängt, wobei der Eingangskreis eine ersten Ausgang besitzt, der an den Initialisierungskreis des Frequenzteilers angeschlossen ist, einen Zähle (9), der eingangsseitig mit dem Frequenzverdoppler verbunden ist und mit einem Initialisierungseingang an einen zweiten Ausgang des Eingangskreises (8) angeschlossen ist, eine Kippstufe (10) vom Typ JK, die mit einem Takteingang an einen ersten Ausgang des Zählers (9) angeschlossen ist, welcher ein erstes Signal (h1) liefert, und ein Schieberegister (13) aufweist, das vom Frequenzverdoppler gesteuert und eingangsseitig mit einem invertierten Ausgang der Kippstufe (10) verbunden ist, wobei das Schieberegister einen ersten Ausgang, der durch einen ersten Draht (14) mit dem Frequenzteiler und dem Initialisierungskreis verbunden ist, einen zweiten Ausgang, der mit dem Rückstelleingang der Kippstufe verbunden ist, und einen dritten Ausgang besitzt, der durch einen zweiten Draht (15) mit dem Frequenzteiler und dem Initialisierungskreis verbunden ist, wobei der Frequenzteiler als Teiler durch vier wirkt, wenn er einen Impuls (sJ, sK) von jedem der ersten und dritten Ausgänge empfängt und über einen Ausgangsinverter (6) ein Taktsignal (Hi) liefert, das ein Synchronisationssignal umfaßt, wobei das Taktsignal eine Frequenz besitzt, die gleich der des ersten, vom Zähler (9) gelieferten Signals (h1) ist, und wobei das Synchronisationssignal eine Frequenz besitzt, die halb so groß wie die des Taktsignals ist und eine Dauer von einer Periode besitzt, und daß der Zähler (9) eine zweiten Ausgang besitzt, der ein zweites Signal (h2) mit einer Frequenz liefert, die halb so groß die des ersten Signals (h1) ist, und dessen Ausgang einerseits an einen anderen Eingang des Eingangskreises (8) und andererseits über einen Inverter (11, 12) an jeden Eingangskreis der beiden anderen Sekundärtaktgeber angeschlossen ist, wobei jeder Inverter ein Taktsynchronisationssignal (Sij; Sik) liefert.

2. Verteilanordnung nach Anspruch 1, dadurch gekennzeichnet, daß der Frequenzteiler (4) eine eine Kippstufe Typ JK ist mit einem Takteingang, der an den Frequenzverdoppler angeschlossen ist, mit einem ersten Eingang (J), der über den ersten Draht (14) an den ersten Ausgang des Schieberegisters (13) angeschlossen ist, mit einem zweiten Eingang (K), der über den zweiten Draht (15) an den dritten Ausgang des Schieberegisters angeschlossen ist, mit einem Rückstelleingang, der an den Initialisierungskreis (7) angeschlossen ist und mit einem invertierten Ausgang, der an den Ausgangsinverter (6) angeschlossen ist, daß der erste und der dritte Ausgang des Schieberegisters je einen Impuls liefern, dessen Dauer zwei Perioden des vom Frequenzverdoppler gelieferten Signals beträgt, wobei der vom dritten Ausgang gelieferte Impuls in Bezug auf den vom ersten Ausgang gelieferten Impulus die Breite dieses Impulses verschoben ist, und daß der zweite Ausgang des Schieberegisters einen Impuls (A) liefert, der die gleiche Breite wie der vom ersten Ausgang gelieferte Impuls besitzt und in Bezug auf diesen um eine halbe Impulsbreite verschoben ist.

3. Verteilanordnung nach Anspruch 1, dadurch gekennzeichnet, daß der Eingangskreis (8) einen Majoritetslogikkreis, eine Kippstufe (29) vom Typ JK und eine Verzögerungsleitung (30) aufweist, daß der Majoritätslogikkreis eingangsseitig an die Taktsynchronisationssignal und ausgangsseitg an einen. Takteingang der Kippstufe angeschlossen ist wobei der Ausgang des Majoritätslogikkrises den ersten Ausgang des mit dem Intialisierungskreis (7) verbunden Eigangskreises bildet, und dab die Kippstufe einen ersten, mit einen positiven Potential verbundenen Eingang (J), zweiten, mit Masse verbundenen Eingang (K) und einen invertierten, den zweiten Ausgang des Eingangskreises bildenden Ausgang besitzt, wobei der invertierte Ausgang auch über die Verzogerungsleitung, (30) an einen Rückstelleingang angeschlossen ist.

4. Verteilanordnung nach Anspruch 1, dadurch gekennzeichnet, daß der Initalisierungskreis (7) eine erste Kippstufe (40) vom Typ JK, eine zweite Kippstufe (41) vom Typ D, und eine dritte Kippstufe (42) vom Typ D aufweist, daß ein Rückstelleingang jeder Kippstufe über zwei in Reihe geschaltete Inverter (43, 44) an ein positives Potential geschaltet ist, daß die erste Kippstufe (40) mit einem ersten Eingang (J) an ein anderes positives Potential, mit einem zweiten Eingang (K) an Masse und mit einem Takteingang an den ersten Ausgang des Eingangskreises (8) angeschlossen ist, daß die zweite Kippstufe (41) mit einem Eingang an einen direkten Ausgang der ersten Kippstufe, und mit einem Takteingang an den dritten Ausgang des Schieberegisters (13) angeschlossen ist, und daß die dritte Kippstufe (42) mit einem. Eingang an den direkten Ausgang der zweiten Kippstufe (41), mit einem. Takteingang an den ersten Ausgang des Schieberegisters, und mit einem direkten Ausgang an einen Rückstelleingang des Frequenzteilers (4) angeschlossen ist.

5. Verteilanordnung nach Anspruch 1, dadurch gekennzeichnet, daß ein Empfänger (R) außerdem einen Taktregenerierkreis (RH) und einen Synchronisationsregenerierkreis (RS) aufweist, die eingangsseitig an den Majoritätslogikkreis (1) angeschlossen sind, der ein Majoritätstaktsignal (HO) liefert daß der Taktregenerierkreis ein eingangsseitig mit dem Majoritätslogikkreis verbundenes Exklusiv-ODER-Tor (70), einen mit Exklusiv-ODER-Tor verbundenen Regenerier- und Filterkreis (71, 72) zur Regenerierung und Filterung des Taktsignals im wom Exklusiv-ODER-Tor übertragenen Majoritätstaktsignal, wobei der Regenerier- und Filterkreis eine ersten und einen zweiten Ausgang besitzt, und einen Synchronisations- und Teilerkreis (73) aufweist, der durch ein vom zweiten Ausgang des Regenerier- und Filterkreises geliefertes Signal (C̄KM̄) gesteuert wird und über einen Ausgangsinverter (74) ein Taktsignal (H) liefert, daß der Synchronisationsregenerierkreis (RS) einen Testkreis (60, 61, 62) zur Überprüfung der Dauer der Majoritätstaktsignalimpulse (HO) einen Wiederherstellungskreis (63, 64) zur Erneuerung des Synchronisationssignals aufweist, wobei der Testkreis ausgangsseitig mit einem Eingang des Exklusiv-ODER-Tors und mit dem Wiederherstellungskreis verbunden ist, wobei der Wiederherstellungskreis zur Steuerung einerseits an den Ausgang des Exklusiv-ODER-Tors und andererseits an den ersten Ausgang des Regenerier- und Filterkreises angeschlossen ist, und wobei ein erster Ausgang des Wiederherstellungskreises an einen Ausgangsinverter (65) zur Lieferung des Synchronisationssignals (HS) und ein zweiter Ausgang an einen Eingang des Synchronisations- und Teilerkreises (73) angeschlossen sind.

6. Verteilanordnung nach Anspruch 5, dadurch gekennzeichnet, daß der Regenerier- und Filterkreis aus einer Kippstufe (71) vom Typ D und einer Verzögerungsleitung (72) besteht, wobei die Kippstufe mit einem Takteingang an den Ausgang des Exklusiv-ODER-Tors mit einem Dateneingang an ein positives Potential, mit einem direkten Ausgang und einer invertierten Ausgang über die Verzögerungsleitung an einen Rückstelleingang der Kippstufe angeschlossen ist, und wobei der der direkte und der invertierte Ausgang die ersten und zweiten Ausgänge des Regenerier- und Filterkreises bilden.

7. Verteilanordnung nach Anspruch 5, dadurch gekennzeichnet, daß der Synchronisations- und Teilerkreis aus einer Kippstufe (73) vom Typ JK besteht mit, einen an den zweiten Ausgang des Regenerier- und Filterhreises (71, 72) angeschlossenen Takteingang, einem ersten, an den zweiten Ausgang des Wiederherstellungskreises (63, 64 ) angeschlossen Eingang (J), mit einem zweiten an ein positives Potential angeschlossenen Eingang (K) und mit einem an den Ausgangsinverter (74) angeschlossenen direkten Ausgang (74) zur Lieferung des Taktsignals (H).

8. Verteilanordnung nach Anspruch 5, dadurch gekennzeichnet, daß der Testkreis aus einer Kippstufe (61) vom Typ D, einer ersten (60) und einer zweiten Verzögerungsleitung (62) besteht, wobei ein Dateneingang der Kippstufe und ein Eingang der ersten Verzögerungsleitung (60) mit dem Majoritätslogikkreis (1) verbunden ist, die erste Verzögerungsleitung ausgangsseitig mit einem Takteingang der Kippstufe verbunden ist, ein invertierter Ausgang der Kippstufe über die zweite Verzögerungsleitung (62) mit einem Rückstelleingang verbunden ist, und der direkte Ausgang der Kippstufe den Ausgang des Testkreises bildet.

9. Verteilanordnung nach Anspruch 5, dadurch gekennzeichnet, daß der Wiederherstellungskreis aus einer ersten Kippstufe (63) vom Typ D und einer zweiten Kippstufe (64) vom Typ JK besteht, daß die erste Kippstufe mit einem Dateneingang an den Ausgang des Testkreises, mit einem Takteingang an das Exklusiv-ODER-Tor (70) mit einem direkten Ausgang an einen ersten Eingang (J) der zweiten Kippstufe und mit einem invertierter Ausgang an einen zweiten Eingang (K) der zweiten Kippstufe angeschlossen ist, und daß die zweite Kippstufe mit einem Takteingang an den ersten Ausgang des Regenerier- und Filterkreises (71, 72) angeschlossen ist, wobei ein direkter und ein invertierter Ausgang die ersten und zweiten Ausgänge des Wiederherstellungskreises bilden.

## Claims

1. A triplicated clock distribution device, wherein each clock signal comprises a synchronization signal, the device comprising at least one mother clock (OM) three slave clocks (OE1, OE2, OE3) and receivers (R) each having a majority logic circuit (1) connected to the three slave clocks each of which has an oscillator (VCO) controlled by the mother clock, characterized in that each slave clock comprises a clock generator (GH) and a synchronization generator (GS) that the clock generator comprises, in addition to the oscillator, a frequency doubler (2, 3, 5), a frequency divider (4) connected to the frequency doubler and adapted to divide by two the frequency of the signal delivered by said frequency doubler, and an initialization circuit (7) having its output connected to the frequency divider, that the synchronization generator (GS) comprises an input circuit (8) having its input connected to the synchronization generators of the other two slave clocks and receiving therefrom a clock synchronization signal (Sji, Ski), said input circuit having a first output connected to the initialization circuit of the frequency divider, a counter (9) having an input connected to the frequency doubler and an initialization input connected to a second output of the input circuit (8), a JK-type flip-flop (10) having a clock input connected to a first output of the counter (9) delivering a first signal (h1), and a shift register (13) driven by the frequency doubler and having its input connected to a complemented output of the flip-flop (10), said shift register having a first output connected by a first wire (14) to the frequency divider and to the initialization circuit, a second output connected to a reset input of the flip-flop and a third output connected by a second wire (15) to the frequency divider and to the initialization circuit, said frequency divider functioning as a divider by four when it receives a pulse (sJ, sK) from each of the first and third outputs and delivering via an output inverter (6) a clock signal (Hi) comprising a synchronization signal, the clock signal having the same frequency as the first signal (h1) delivered by the counter (9), and the synchronization signal having one half the frequency of the clock signal and a duration of one period, and that the counter (9) comprises a second output delivering a second signal (h2) having one half the frequency of the first signal (hi) and connected on the one hand to another input of the input circuit (8) and on the other hand to each input circuit of the other two slave clocks through an inverter (11, 12), each inverter delivering a clock synchronization signal (Sij, Sik)

2. A distribution device according to claim 1, characterized in that the frequency divider (4) is a JK-type flip-flop having a clock input connected to the frequency doubler, a first input (J) connected to the first output of the shift register (13) by the first wire (14), a second input (K) connected to the third output of the shift register by the second wire (15), a reset input connected to the initialization circuit (7) and a complemented output connected to the output inverter (6), that the first and third outputs of the shift register each deliver a pulse the duration of which is equal to two periods of the signal delivered by the frequency doubler, the pulse delivered by the third output being shifted relative to the pulse delivered by the first output by the width of this pulse, and that the second output of the shift register delivers a pulse (A) of the same width as the pulse delivered by the first output and shifted relative to it by half of a pulse width.

3. A distribution device according to claim 1, characterized in that the input circuit (8) comprises a majority logic circuit, a JK-type flip-flop (29) and a delay line (30), that the majority logic circuit has an input connected to receive the clock synchronization signals and an output connected to a clock input of the flip-flop, said output of the majority logic circuit constituting the first output of the input circuit connected to the initialization circuit (7) and that the flip-flop has a first input (J) adapted to be connected to a positive potential, a second input (K) which is grounded and a complemented output constituting the second output of the input circuit, said complemented output being also connected by the delay line (30) to a reset input.

4. A distribution device according to claim 1, characterized in that the initialization circuit (7) comprises a JK-type first flip-flop (40), a D-type second flip-flop (41) and a p-type third flip-flop (42), that a reset input of each flip-flop is adapted to be connected to a positive potential through two inverters (43, 44) in series, that the first flip-flop (40) has a first input (J) adapted to be connected to another positive potential, a second input (K) which grounded and a clock input which is connected to the first output of the input circuit (8), that the second flip-flop (41) has an input connected to a direct output of the first flip-flop and a clock input connected to the third output of the shift register (13), and that the third flip-flop (42) has an input connected to a direct output of the second flip-flop (41), a clock input connected to the first output of the shift register and a direct output connected to a reset input of the frequency divider (4).

5. A distribution device according to claim 1, characterized in that a receiver (R) further comprises a clock regenerator (RH) and a synchronization regenerator (RS) having their inputs connected to the majority logic circuit (1) which delivers a majority clock signal (HO) , that the clock regenerator comprises an exclusive-OR gate (70) having an input connected to the majority logic circuit, a regeneration and filter circuit (71, 72) which is connected to the exclusive-OR gate in order to regenerate and filter the clock signal in the clock majority signal transmitted by the exclusive-OR gate, said regeneration and filter circuit having first and second outputs and a synchronization and divider circuit (73) controlled by a signal (C̄K̄M̄) delivered by the second output of the regeneration and filter circuit and delivering through an output inverter (74) a clock signal (H) that the synchronization regenerator (RS) comprises a circuit (60, 61, 62) for testing the duration of the pulses of the majority clock signal (NO) and a circuit (63, 64) for restoring the synchronization signal, said test circuit having its output connected to an input of the exclusive-OR gate and to the restore circuit, said restore circuit being connected for controlling, on the one hand to the output of the exclusive-OR gate and on the other hand to the first output of the regeneration and filter circuit, whereas a first output of said restore circuit is connected to an output inverter (65) to deliver the synchronization signal (HS), and a second output is connected to an input of the synchronization and divider circuit (73).

6. A distribution device according to claim 5, characterized in that the regeneration and filter circuit is constituted by a D-type flip-flop (71) and a delay line (72), said flip-flop having a clock input connected to the output of the exclusive-OR gate, a data input adapted to be connected to a positive potential, a direct output and a complemented output connected to a reset input of the flip-flop through the delay line, the direct and complemented outputs constituting the first and second outputs of the regeneration and filter circuit.

7. A distribution device according to claim 5, characterized in that the synchronization and divider circuit is constituted by a JK-type flip-flop (73) having a clock input connected to the second output of the regeneration and filter circuit (71, 72), a first input (J) connected to the second output of the restore circuit (63, 64), a second input (K) adapted to be connected to a positive potential and a direct output connected to the output inverter (74) to deliver the clock signal (H).

8. A distribution device according to claim 5, characterized in that the test circuit is constituted by a D-type flip-flop (61) and first (60) and second delay lines (62), a data input of the flip-flop and an input of the first delay line (60) being connected to the majority logic circuit (1), the output of the first delay line being connected to a clock input of the flip-flop, a complemented output of the flip-flop being connected to a reset input by the second delay line (62), and a direct output of the flip-flop constituting the output of the test circuit.

9. A distribution device according to claim 5, characterized in that the restore circuit is constituted by a D-type first flip-flop (63) and a JK-type second flip-flop (64), that the first flip-flop has a data input connected to the output of the test circuit, a clock input connected to the exclusive-OR gate (70), a direct output connected to the first input (J) of the second flip-flop and a complemented output connected to a second input (K) of the second flip-flop, and that the second flip-flop has a clock input connected to the first output of the regeneration and filter circuit (71, 72) and a direct output and a complemented output constituting the first and second outputs of the restore circuit.

# FIG.1

EP 0 190 730 B1

FIG.2

FIG.3

FIG.4

FIG.5

FIG.6

# FIG.7

62,5ns

OE1 { CK16
      9   1FFF   0   1   2   3   4   5   6   1000 1001 1002 1003

OE2 { CK16
      9   1FFE 1FFF 0   1   2   3   4   5   6   1000 1001 1002 1003

OE3 { CK16
      9   1FFE 1FFF 0   1   2   3   4   5   6   1000 1001 1002 1003

OE1
OE2  LMS   256µs
OE3  LD

OE1 { SYN
      sJ
      sK

OE2 { SYN
OE3   sJ
      sK

OE1  H1   125ns
OE2  H2
OE3  H3   f1   f   f2
     H0   f1   f

EP 0 190 730 B1

# FIG.8

EP 0 190 730 B1

FIG.9

FIG.10

EP 0 190 730 B1